# EUROPÄISCHE PATENTSCHRIFT

(11) **EP 1 832 799 B1**
(45) Veröffentlichungstag und Bekanntmachung des Hinweises auf die Patenterteilung: **16.08.2017**
(21) Anmeldenummer: 06004777.6
(22) Anmeldetag: 08.03.2006
(51) Int. Cl.: F16M 5/00

(54) **Werkstückträger**
Workpiece support
dispositif porte-pièce

(43) Veröffentlichungstag der Anmeldung: 12.09.2007
(73) Patentinhaber: Siemens Aktiengesellschaft, 80333 München (DE)
(72) Erfinder: Carl, Jörn-Thoralf, 07315 Saalfeld (DE); Halupka, Rolf, 07334 Kamsdorf (DE); Neubauer, Lars, 52066 Aachen (DE); Schneider, Frank, 90480 Nürnberg (DE)

(56) Entgegenhaltungen:
- EP-A- 1 300 596
- WO-A-2005/025802
- FR-A- 2 235 761
- FR-A- 2 586 607
- FR-A- 2 654 667
- US-A- 3 866 897
- US-A- 4 816 847
- US-A- 4 882 961
- US-B1- 6 241 229

## Beschreibung

Die Erfindung bezieht sich auf einen Werkstückträger mit mindestens einer Aufbauplatte, die mindestens eine Bauteil-Aufnahme aufweist, wobei die Aufbauplatte (3) in Sandwich-Bauweise mit mehreren Schichten (5, 6) aufgebaut ist, von denen mindestens zwei Schichten (5, 6) verschiedenes Material aufweisen.

Weitere Werkstückträger, auch als Aufnahmevorrichtungen bezeichnet, sind bekannt, z.B. aus der DE 103 33 149 A1. Die Druckschrift DE 103 33 149 A1 offenbart eine Vorrichtung zur Oberflächenbehandlung. Hierbei handelt es sich um die Lackierung eines Werkstückes, insbesondere einer Fahrzeugkarosserie oder eines Karosseriebauteils. Die hier beschriebene Vorrichtung weist schwenkbare Aufnahmeeinrichtungen zur lösbaren Aufnahme und Schwenken der Werkstücke auf. Das Werkstück wird vor Beginn des Lackierungsprozesses entweder direkt auf der Aufnahmevorrichtung oder aber auf einem Halterungsgestell, d.h. einer Bauteil-Aufnahme gehalten, die mit der Aufnahmevorrichtung verbunden ist.

Die Druckschrift FR 2 654 667 A1 offenbart einen Werkstückträger mit mindestens einer Aufbauplatte, die mindestens eine Bauteil-Aufnahme aufweist, wobei die Aufbauplatte in Sandwich-Bauweise mit mehreren Schichten aufgebaut ist, von denen mindestens zwei Schichten verschiedenes Material aufweisen,und wobei ein im Wesentlichen aus Standardprofilen modular aufgebauter Grundrahmen vorgesehen ist, auf dem die mindestens eine Aufbauplatte gehalten ist.

Solche Aufnahmevorrichtungen werden bekanntermaßen dazu verwendet, um irgendwie geartete Teile definiert für nachgelagerte Schritte aufzulegen, zu transportieren, zu bearbeiten und in einem nachgelagerten Schritt mit anderen Komponenten zu fügen. Abhängig von dem Gewicht der Teile müssen die Aufnahmevorrichtungen entsprechend aufgebaut sein, um den hohen Belastungen standzuhalten. Im Automobilbau ist es z.B. üblich, für die Werkstückträger Stahl-/Schweiß-Konstruktionen mit Stahlaufbauten zu verwenden. Im Bereich Automotiv werden diverse Fahrwerkteile auf die Werkstückträger aufgelegt. Dies bedeutet, dass die Werkstückträger an mindestens ein Automotiv-Produkt für mindestens einen Automotiv-Typ technisch in Art, Ausprägung, Schnittstellen zur jeweiligen Anlage bis hin zu den Bauteile-Aufnahmen gebunden sind.

Der Einsatz von Stahlkonstruktionen bei bisherigen Werkstückträgern ist aufgrund des damit verbundenen hohen Gewichts auch mit entsprechend aufwändigen Stahlkonstruktionen der Anlage, stabilerer Fördertechnikausführungen und leistungsfähigen und aufwendigen Antrieben verbunden.

Daher liegt der Erfindung die Aufgabe zugrunde, einen Werkstückträger der oben genannten Art zu schaffen, der aufgrund seines Aufbaus eine einfache Herstellung und ein vergleichsweise geringes Eigengewicht hat sowie möglichst geringe Herstellungskosten erfordert.

Diese Aufgabe wird durch einen Werkstückträger der oben genannten Art gelöst, bei dem eine Kernschicht der mindestens einen Aufbauplatte eine Toleranzausgleichsfuge aufweist, und bei dem die Bauteil-Aufnahme einstückig aus druckfestem Kunststoff ausgeführt ist und an ihrer Auflagefläche mit einem Auflageverschleißteil versehen ist und ein im Wesentlich aus Standardprofilen modular aufgebauter Grundrahmen vorgesehen ist, auf dem die mindestens eine Aufbauplatte gehalten ist. Eine solche Bauteil-Aufnahme ist besonders einfach und kostengünstig in der Herstellung. In Bezug auf die Befestigung derartiger Bauteil-Aufnahmen ist es von Vorteil, wenn diese in der Aufbauplatte mittels druckfestem Füllstoff fixiert sind.

Vorteilhafte Weiterbildungen der Erfindung sind den Unteransprüchen zu entnehmen.

Besonders vorteilhaft ist es gemäß Anspruch 2, wenn die Aufbauplatte eine Schicht aufweist, die zumindest teilweise als Gitter ausgeführt ist. Ein solcher Gitteraufbau ermöglicht die Herstellung einer Kernschicht der Aufbauplatte mit hoher Druckfestigkeit bei vergleichsweise geringem Gewicht. Ein weiterer Vorteil der Sandwich-Bauweise ist die einfache Bearbeitbarkeit durch Zuschnitt und Verklebemöglichkeit.

Um eine möglichst hohe Druckfestigkeit zu erreichen, ist es vorteilhaft, wenn das Gitter wabenförmig ausgeführt ist. Eine weitere vorteilhafte Ausführungsform besteht, wenn eine der Schichten im Wesentlichen aus Metallschaum besteht.

Außerdem ist es vorteilhaft, wenn die Aufbauplatte an zumindest einer Oberfläche eine Schicht aufweist, die in Metall, z.B. als Stahl- oder Aluminiumblech ausgeführt ist. Somit ist die Herstellung einer besonders druckfesten Aufbauplatte möglich, bei der als Deckschichten nur in geringem Umfang Stahl o.ä. verwendet wird und die dazwischenliegende Kernschicht aus einem leichten aber ebenfalls sehr belastbaren Material besteht.

Ein Grundrahmen mit möglichst geringem Gewicht lässt sich herstellen, wenn die Standardprofile im Wesentlichen aus Aluminium bestehen.

Ein Ausführungsbeispiel der Erfindung wird im Folgenden anhand einer Zeichnung näher erläutert. Es zeigen:
- FIG 1: eine Seitenansicht eines erfindungsgemäßen Werkstückträgers mit einem Grundrahmen und Aufbauplatten,
- FIG 2: eine Schnittdarstellung einer Aufbauplatte gemäß FIG 1 in Sandwich-Bauweise,
- FIG 3: eine Aufbauplatte gemäß FIG 2 mit einer Bauteil-Aufnahme,
- FIG 4: eine Bauteil-Aufnahme,
- FIG 5: eine Querschnittsdarstellung einer Aufbauplatte mit Zwischenschicht aus Metallschaum und integrierter Bauteil-Aufnahme,
- FIG 6: eine Zwischenschicht gemäß FIG 5 mit Toleranzausgleichsfuge,
- FIG 7: einen Grundrahmen gemäß FIG 1 aus Standardprofilen und
- FIG 8: eine perspektivische Ansicht eines erfindungsgemäßen Werkstückträgers mit einem modular aufgebauten Grundrahmen und mehreren Aufbauplatten in Sandwich-Bauweise.

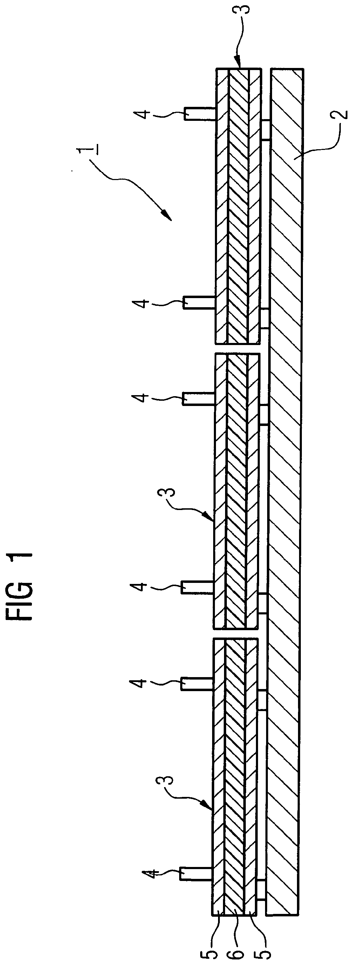

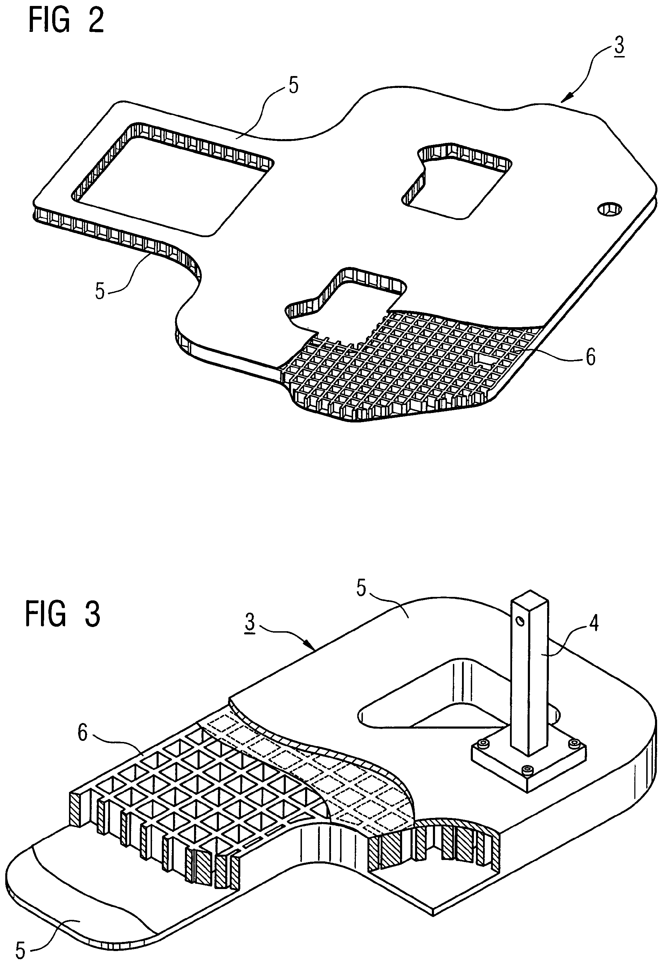

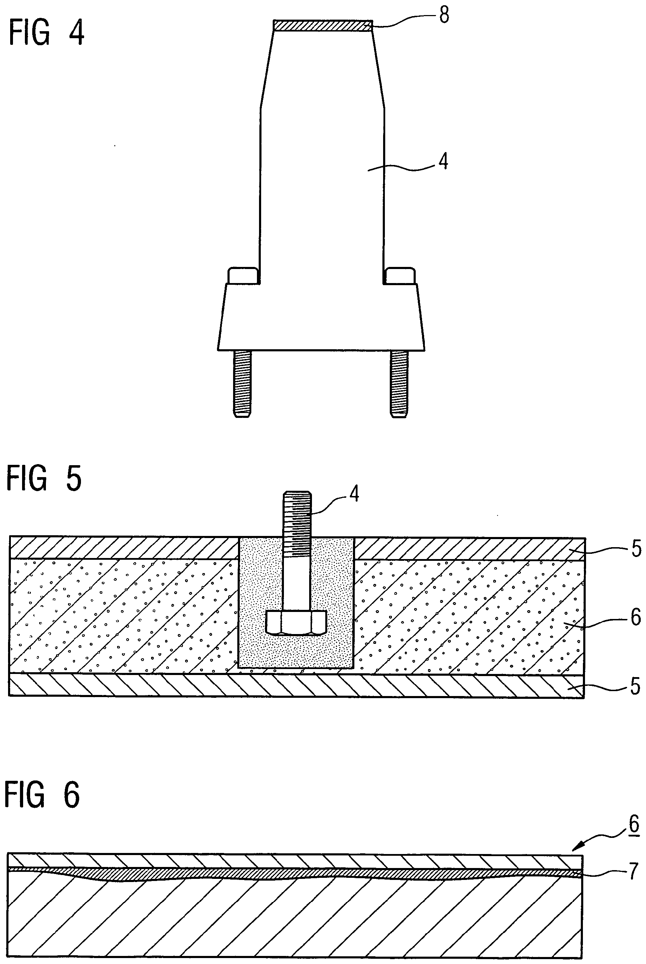

In FIG 1 ist eine Seitenansicht eines Werkstückträgers 1 dargestellt, der einen Grundrahmen 2, auf diesen gehaltene Aufbauplatten 3 sowie auf den Aufbauplatten befestigte Bauteil-Aufnahmen 4 aufweist. Die Aufbauplatten 3 sind aus mehreren Schichten 5, 6 in Sandwich-Bauweise aufgebaut, wobei mit dem Bezugszeichen 5 die Deckschichten an der Oberfläche der Aufbauplatte 3 bezeichnet sind und zwischen diesen beiden Deckschichten 5 die Kernschicht 6 liegt (siehe Figuren 2, 3 und 5). Die Deckschichten 5 sind im Wesentlichen jeweils aus Stahl, d.h. einer Stahlplatte oder einem Stahlblech hergestellt. Die dazwischenliegende Kernschicht 6 ist gemäß FIG 2 und 3 in Gestalt eines Gitters ausgeführt und besteht aus Kunststoff, vorzugsweise aus einem Glasfaserkunststoff. Dabei kann die Gittergestalt unterschiedlich ausgeführt sein, z.B. ist eine wabenförmige Gitterstruktur mit besonders hoher Druckfestigkeit von Vorteil. Eine derartige Aufbauplatte 3 ist besonders einfach in der Verarbeitung, z.B. hinsichtlich Zuschnitt und Verklebemöglichkeit. In FIG 3 ist die Aufbauplatte 3 mit einer darauf befestigten Bauteil-Aufnahme 4 dargestellt. Alternativ kann die Aufbauplatte 3 gemäß FIG 5 mit einer im Wesentlichen aus Metallschaum bestehenden Kernschicht 6 aufgebaut sein. Bei dieser Ausführung lässt sich wie in FIG 5 dargestellt auf einfache Weise eine Bauteil-Aufnahme 4 mittels druckfestem Füllstoff, z.B. Kunstharzspachtel in der Aufbauplatte 1 fixieren.

Bei der Herstellung von Kernschichten 5 sind Toleranzen mehr oder weniger großen Ausmaßes nicht immer vermeidbar. Um dennoch Kernschichten 6 mit möglichst geringer Toleranz zu erhalten, wird die Kernschicht 6 gemäß FIG 6 mit einer Toleranzausgleichsfuge 7 versehen, die mit Füllmaterial ausgefüllt ist.

In FIG 4 ist eine einstückig aus Kunststoff, vorteilhafterweise aus Glasfaserkunststoff, ausgeführte Bauteil-Aufnahme 4 dargestellt, die an ihrer Auflagefläche mit einem wechselbaren Verschleißteil 8 versehen ist. Derartige Bauteil-Aufnahmen 4 sind kostengünstig herstellbar und haben den Vorteil eines geringen Gewichts.

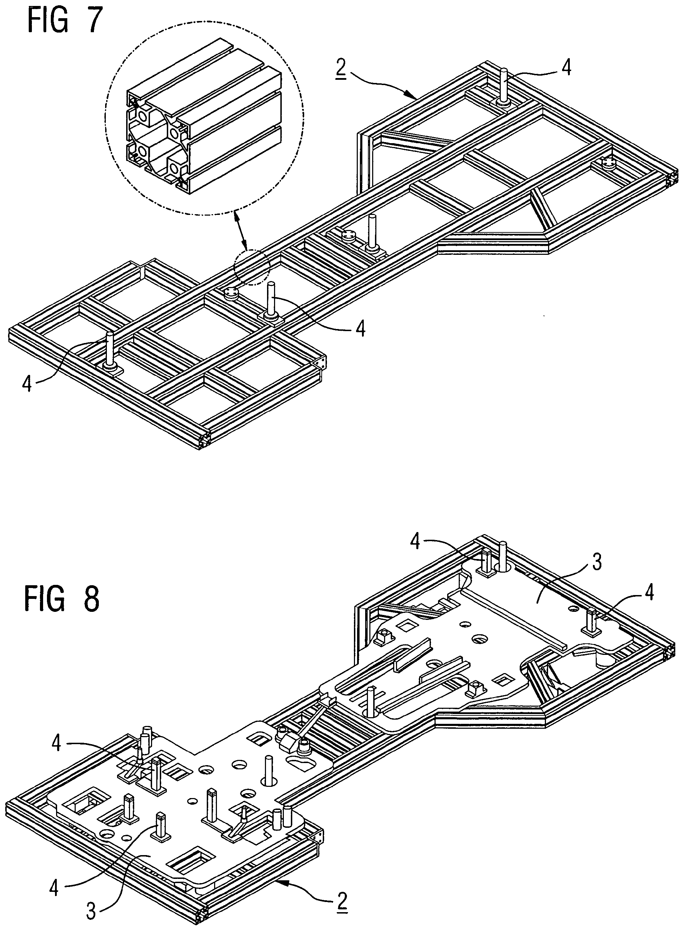

FIG 7 zeigt einen Werkstückträger mit einem Grundrahmen 2 und mehreren daraufgehaltenen Aufbauplatten 3 in Sandwich-Bauweise. Der Grundrahmen 2 ist hier (siehe auch FIG 8) modular aus Standardprofilen aufgebaut. Dabei wird als Material ein Leichtmetall, vorzugsweise Aluminium verwendet, um auch hierdurch das Gewicht des gesamten Werkstückträgers möglichst gering zu halten. Die Verwendung von Standardprofilen ermöglicht einen flexiblen Aufbau für den jeweiligen Einsatzfall mit beliebigen Variationsmöglichkeiten in Länge und Breite, Profilhöhe und Tragwerksanordnung. Der beschriebene Aufbau des Grundrahmens 2 mit Standardprofilen bringt die Vorteile einer leichten Bearbeitbarkeit, z.B. beim Zuschneiden und Verschrauben mit sich sowie eine hohe Beständigkeit gegen Umwelteinflüsse, d.h. unter anderem die Vermeidung von Rost.

## Patentansprüche

1. Werkstückträger mit mindestens einer Aufbauplatte (3), die mindestens eine Bauteil-Aufnahme (4) aufweist, wobei die Aufbauplatte (3) in Sandwich-Bauweise mit mehreren Schichten (5, 6) aufgebaut ist, von denen mindestens zwei Schichten (5, 6) verschiedenes Material aufweisen,
**dadurch gekennzeichnet,**
**dass** eine Kernschicht (6) der mindestens einen Aufbauplatte (3) eine Toleranzausgleichsfuge (7) aufweist,
und **dass** die Bauteil-Aufnahme (4) einstückig aus druckfestem Kunststoff ausgeführt ist und an ihrer Auflagefläche mit einem Auflageverschleißteil (8) versehen ist,
und **dass** ein im Wesentlichen aus Standardprofilen modular aufgebauter Grundrahmen (2) vorgesehen ist, auf dem die mindestens eine Aufbauplatte (3) gehalten ist.

2. Werkstückträger nach Anspruch 1, **dadurch gekennzeichnet, dass** zumindest eine der Schichten (5, 6) der Aufbauplatte (3) zumindest teilweise als Gitter ausgeführt ist.

3. Werkstückträger nach Anspruch 2, **dadurch gekennzeichnet, dass** das Gitter wabenförmig ausgeführt ist.

4. Werkstückträger nach Anspruch 1, **dadurch gekennzeichnet, dass** eine der Schichten (5, 6) der Aufbauplatte (3) im Wesentlichen aus Metallschaum besteht.

5. Werkstückträger nach einem der vorangehenden Ansprüche, **dadurch gekennzeichnet, dass** die Aufbauplatte an zumindest einer Oberfläche mindestens eine Schicht (5, 6) aufweist, die in Metall, z.B. Stahl- oder Aluminiumblech ausgeführt ist.

6. Werkstückträger nach einem der vorangehenden Ansprüche, **dadurch gekennzeichnet, dass** die Bauteil-Aufnahme (4) in der Aufbauplatte (3) mittels druckfestem Füllstoff fixiert ist.

7. Werkstückträger nach einem der vorangehenden Ansprüche, **dadurch gekennzeichnet, dass** die Standardprofile im Wesentlichen aus Aluminium bestehen.

## Claims

1. Workpiece support with at least one buildup plate (3) which has at least one component receiver (4), wherein the buildup plate (3) is of sandwich construction with multiple layers (5, 6) of which at least two layers (5, 6) have different material
**characterized**
**in that** a core layer (6) of the at least one buildup plate (3) has a tolerance compensation join (7),
and **in that** the component receiver (4) is made in one piece of pressure-resistant plastic and is provided, on its bearing surface, with a bearing wear part (8),
and **in that** there is provided a base frame (2) which is constructed in an essentially modular manner of standard profiles and on which the at least one buildup plate (3) is held.

2. Workpiece support according to Claim 1, **characterized in that** at least one of the layers (5, 6) of the buildup plate (3) is designed at least in part as a grid.

3. Workpiece support according to Claim 2, **characterized in that** the grid is designed as a honeycomb.

4. Workpiece support according to Claim 1, **characterized in that** one of the layers (5, 6) of the buildup plate (3) consists essentially of metal foam.

5. Workpiece support according to one of the preceding claims, **characterized in that** the buildup plate has, on at least one surface, at least one layer (5, 6) which is made of metal, for example sheet steel or sheet aluminium.

6. Workpiece support according to one of the preceding claims, **characterized in that** the component receiver (4) is secured in the buildup plate (3) using a pressure-resistant filler.

7. Workpiece support according to one of the preceding claims, **characterized in that** the standard profiles consist essentially of aluminium.

## Revendications

1. Porte-pièce comprenant au moins un plateau (3) de montage, qui a au moins un logement (4) pour une pièce, le plateau (3) de montage étant constitué en mode de construction en sandwich en ayant plusieurs couches (5, 6), dont au moins deux couches (5, 6) ont des matériaux différents,
**caractérisé**
**en ce qu'**une couche (6) d'âme du au moins un plateau (3) de montage a un joint (7) de compensation de tolérance et en ce que le logement (4) pour une pièce est réalisé d'une seule pièce en une matière plastique résistante à la pression et est pourvu, sur sa surface de support, d'une partie (8) d'usure de support
et **en ce qu'**il est prévu un cadre (2) de base constitué de manière modulaire de profilés normalisés, auquel est retenu le au moins un plateau (3) de montage.

2. Porte-pièce suivant la revendication 1, **caractérisé en ce qu'**au moins l'une des couches (5, 6) du plateau (3) de montage est réalisée, au moins en partie, sous la forme d'une grille.

3. Porte-pièce suivant la revendication 2, **caractérisé en ce que** la grille est réalisée en nid d'abeille.

4. Porte-pièce suivant la revendication 1, **caractérisé en ce que** l'une des couches (5, 6) du plateau (3) de montage est essentiellement en mousse métallique.

5. Porte-pièce suivant l'une des revendications précédentes, **caractérisé en ce que** le plateau de montage a, sur au moins une surface, au moins une couche (5, 6), qui est en métal, par exemple en tôle d'acier ou en tôle d'aluminium.

6. Porte-pièce suivant l'une des revendications précédentes, **caractérisé en ce que** le logement (4) pour une pièce, dans le plateau (3) de montage, est immobilisé au moyen d'une charge résistante à la pression.

7. Porte-pièce suivant l'une des revendications précédentes, **caractérisé en ce que** les profilés normalisés sont essentiellement en aluminium.
